# EUROPEAN PATENT APPLICATION

(11) **EP 4 678 684 A1**
(43) Date of publication of application: **14.01.2026**
(21) Application number: 25182304.3
(22) Date of filing: 12.06.2025
(51) Int. Cl.: C08J 5/04, C08K 7/14, C08L 71/14

(54) **RESIN-BASED FLOORING PRODUCT, PROCESS, AND COMPOSITION**

(30) Priority: 12.07.2024 GB 202410189
(71) Applicant: Lionweld Kennedy Flooring Limited, Solihull West Midlands B90 4LH (GB)
(72) Inventor: Thompson, Reece, Solihull, B90 4JH (GB)
(74) Representative: Marks & Clerk LLP

(57) **Abstract**

A resin composition for forming a structural element such as a flooring panel comprises a resin system comprising: 45-60 wt % of a plant-derived polyfurfuryl alcohol resin; up to 15 wt % of a non-structural filler such as talc or jute fibre; and 35-40 wt % of a glass fibre. A method of making the structural element comprises mixing the resin and filler to produce the resin system; laying up multiple layers of the resin system and the glass fibre in a mould; subjecting the mould to an initial heating profile in an initial resin curing step so that the resin system undergoes a condensation reaction and such that substantially all of the water produced in the condensation reaction has been removed, wherein the heating profile comprises a first, an intermediate, and a final temperature. The product is subsequently subjected to a post-curing step comprising a Diels-Alder reaction.

## Description

### FIELD OF THE INVENTION

This invention relates to a resin-based structural element such as a flooring product, and a process and composition for its manufacture.

### BACKGROUND

Moulded GRP (glass reinforced plastic) structural elements such as grating or panels for walkways, platforms, decks, etc. have been known for some years. Examples of such products include Flowgrate gratings available from Lionweld Kennedy Flooring Ltd. of Middlesbrough, UK (https://lk-uk.com/products/grp/). Other such products include Flowdeck solid top flooring Flowtread grate floorings and Flowgrip panels. These products are moulded from resin with a glass fibre roving in the resin for strength. The resin component can be a polyester, vinylester, or phenolic resin.

The resins listed above are petrochemical products and it has become desirable to replace such products with materials sources from renewable sources, such as plant products to reduce reliance on petroleum and to avoid carbon release to the environment. While plant-based resins are known, their use in structural elements is not currently known and formulations suitable for use in such applications are not in use.

Polyfurfuryl alcohol resins are one type of plant-based resins. However, they cannot simply be substituted for the known petrochemical resins because of their different chemistry.

### SUMMARY

A resin composition suitable for forming structural elements such as flooring panels, comprises a resin system comprising 45-60 wt % of a plant-derived polyfurfuryl alcohol resin; and up to 15 wt % of a non-structural filler; and 35-40 wt % of a glass fibre. The resin system can further comprise up to 5 wt % of a solvent such as water; and 4-6 wt % of a catalyst system.

The glass fibre can be an E-glass or E-CR glass having a tensile strength of greater than 20 MPa. The non-structural filler can comprise up to 5 wt % talcum powder; and up to 10 wt % jute fibre.

A structural element having a predetermined shape can be formed by moulding the resin composition. The structural element can comprise a load bearing element such as a flooring panel with a load bearing surface in the form of an open grating or mesh, or a panel with a substantially solid load bearing surface.

A method of making a structural element, comprises:
mixing the plant-derived polyfurfuryl alcohol resin and non-structural filler to produce the resin system;
laying up multiple layers of the resin system and the glass fibre in a mould;
subjecting the mould to an initial heating profile in an initial resin curing step so that the resin system undergoes a condensation reaction and such that substantially all of the water produced in the condensation reaction has been removed, wherein the heating profile comprises:
   holding the mould at a starting temperature for a first predefined period;
   raising the temperature of the mould to an intermediate temperature;
   holding the mould at the intermediate temperature for a second predefined period;
   raising the temperature of the mould to a final temperature;
   holding the mould at the final temperature for a third predefined period;
   cooling the mould to ambient temperature; and
   removing the product from the mould; and
subsequently subjecting the product to a further heating profile so as to undergo a final curing step comprising a Diels-Alder reaction, the further heating step comprising:
   heating the product to a fourth temperature that is higher than the third temperature;
   holding the product at the fourth temperature for a fourth predefined period; and
   cooling the product to ambient temperature.

In one example, the first temperature is about 50 °C, and the first predetermined period is about 4 hours; the second temperature is about 60 °C, and the second predetermined period is about 1 hour; the third temperature is about 80 °C, and the third predetermined period is about three hours; and the fourth temperature is about 110 °C, and the fourth predetermined period is about three hours.

The initial heating profile can be performed with the mould in an oven or using a self-heating mould.

An internal release agent can be to the resin composition and/or the surface of the mould can be coated with external release agent before laying up. Grit can be to the final layer of resin, i.e. the outer surface, when laying up. One or more layers of jute fibre can be laid up as final layers.

Lay ups can include 10 layers of glass fibre, or nine layers of glass fibre and two layers of jute, or 11 layers of glass fibre and one layer of jute. One layer can comprise four rovings of glass fibre or jute fibre in the mould.

Further aspects of the invention will be apparent from the description.

### DRAWINGS

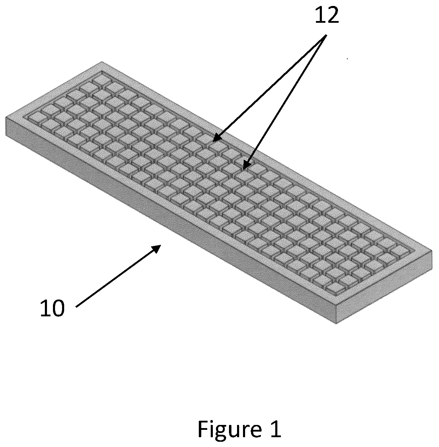

Figure 1 shows an example of a mould suitable for use in the method of the invention.

### DESCRIPTION

Suitable products for forming a resin composition are as follows:
Polyfurfuryl alcohol resin is available as Crestafire^{®} Bio P1-8001 from Scott Bader Company Limited of Wellingborough, UK
(https://www.scottbader.com/business/composites/crestafire-p1-8001/). Suitable catalyst curing systems for this resin include mixtures of 85 wt% phosphoric acid (H₃PO₄), 65 wt% para toluene sulfonic acid (PTSA).

Non-structural fillers can include hydrated magnesium silicate powder (talcum) and jute fibre roving. Such products are widely available. The non-structural fillers are used to reduce the overall amount of resin used in the system. As jute is a natural fibre it can be bio-sources and provide a filler of low embodied carbon.

E-glass and E-CR glass fibre is available from 3B (https://www.3b-fibreglass.com/) of Battice, Belgium. Suitable products include R25H roving line or the SE 3030 roving line (https://www.3b-fibreglass.com/direct-roving). Suitable fibres can have a tensile strength of at least 2000 MPa, e.g. 2200 - 2500 MPa SE 3030, or 2700 - 2800 MPa R25H. Similar products are available from other suppliers.

Table 1 below provides seven example recipes of resin compositions. All percentages are wt %.

**Table 1**

| Recipe Number | P1-8001 (%) | H₃PO₄ (%) | PTSA (%) | Talcum Powder filler (%) | E-glass fibre roving (%) | Jute fibre roving (%) |
|---|---|---|---|---|---|---|
| 1 | 57.1 | 2.29 | 0.57 | 0 | 40 | 0 |
| 2 | 57.7 | 1.73 | 0.58 | 0 | 40 | 0 |
| 3 | 54.95 | 2.20 | 0.55 | 2.30 | 40 | 0 |
| 4 | 55.47 | 1.66 | 0.55 | 2.30 | 40 | 0 |
| 5 | 48.6 | 1.9 | 0.5 | 4 | 36 | 9 |
| 6 | 45.71 | 1.83 | 0.46 | 2 | 45 | 5 |
| 7 | 46.15 | 1.38 | 0.46 | 2 | 45 | 5 |

In addition to these compositions, various consumable materials can be used in the moulding process. These materials do not contribute to the final chemical structure, but they facilitate the successful manufacture of the product. Such products include an internal release agent that can be mixed into the wet resin mixture e.g. PAT 659-A from CRC Ltd of Harrogate, UK; and an external release agent applied directly to the surface of the mould before any ingredients are added to it, the purpose being to lower the surface energy of the mould surface so that the cured product will not adhere to the mould, making release easier. A variety of internal and external release agents are available.

The equipment used to produce the product includes a mould and a roving tool for roving glass and jute fibres into the mould.

The mould can be made of a material such as a steel alloy, designed to have cavities that suit the shape of the final cured product. A steel alloy can be used due to its longevity and durability, being able to undergo many hundreds or even thousands of curing cycles before repair is needed.

Figure 1 shows a schematic view of a mould 10 having cavities 12 in the form of a square grid. Examples of such moulds define the product as, for example, a 3.6 m x 1.2 m panel with square holes of 25 mm x 25mm, 38 mm x 38 mm, or 50 mm x 50 mm. The cavities 12 can have a width at the bottom of about 6mm and can be wider at the top than at the bottom to ease de-moulding of the product. The depth of the cavities can be 25 mm, 38 mm, or 50 mm. Profile examples include 25 x 25 x 50; 38 x 38 x 25; 38 x 38 x 38; and 50 x 50 x 50. The shape and dimensions of the mould features can be selected according to requirements and so may vary from the shapes and dimensions given above in order to provide the required element format.

The process for manufacturing a flooring panel can include the following steps:
1. Weigh out the constituents of the resin mixture: P1-8001, H₃PO₄ and PTSA are weighed out by parts, of 100 parts liquid resin to 3 parts H₃PO₄ to 1 part PTSA.
2. The H₃PO₄ and PTSA are then combined and stirred together until a homogenous mixture is achieved. This mixture is used as an acid catalyst.
3. The P1-8001 is continuously stirred using a suitable mixer while the acid catalyst is added drop by drop (adding it too quickly may lead to gelled particles rather than even dispersion amongst the whole batch), with mixing continuing until complete homogenisation of the mixture has been achieved.
4. While under continuous stirring, talcum powder filler is added gradually until complete dispersion into the mix.
5. While under continuous stirring, internal mould release is added at the maximum recommended levels by the manufacturer. In the case of PAT 659-A, up to 1% of the resin mixture weight is added gradually until complete dispersion into the mix.
6. The mould is prepared with an appropriate external mould release coating.
7. A first layer of resin is poured into the mould cavity.
8. A first layer of glass fibre is woven into the mould. Four rovings woven through each cavity of the mould is considered a single layer.
9. More resin is poured over the top to ensure good wetting of the fibres. Pressure is applied over the fibres with an appropriate handheld implement to reduce the amount of volume the fibres occupy, allowing for a greater fibre loading overall.
10. Steps 8 and 9 are repeated layer by layer until the required amount of glass fibre is achieved.
11. The jute fibre roving is woven into the mould, again four rovings are considered a single layer.
12. More resin is poured over the top to ensure good wetting of the jute fibres. Pressure is applied over the jute fibres with an appropriate handheld implement to reduce the amount of volume the fibres occupy, allowing for a greater fibre loading overall.
13. Steps 10 and 11 are repeated until the required amount of jute fibre is achieved.
14. A suitable grit can be embedded directly into the top of the product as a final layer to form a slip resistant surface, and a final coating of resin can be then painted over the grit. Alternatively, the grit is applied after stage 18 or 19' (see below) using a suitable adhesive.
15. The filled mould is moved into an oven for curing.
16. The following curing cycle is followed:
   a. Increase oven temperature from ambient/room temp to 50°C at a rate of 1 °C per minute.
   b. Hold at 50 °C for 4 hours.
   c. Raise to 60 °C at a rate of 1 °C per minute.
   d. Hold at 60 °C for 1 hour.
   e. Raise to 80 °C at a rate of 1 °C per minute.
   f. Hold at 80 °C for 3 hours.
   g. Cool to ambient/room temperature.
17. The sample is demoulded and placed back in the oven.
18. The sample is post cured following the below cycle:
   a. the oven is heated to 110 °C at a rate of 1 °C per minute.
   b. Hold at 110°C for 3 hours.
   c. Cool to room temperature.

If a self-heating mould is available, the steps 16 to 18 can be replaced by the following:
16'.Set mould to 40°C before carrying out the layup process.
17'.Once the layup process is finished, follow the below curing cycle:
   a. Increase mould temperature from 40°C to 50°C at a rate of 1 °C per minute.
   b. Hold at 50 °C for 3 hours.
   c. Raise to 60 °C at a rate of 1 °C per minute.
   d. Hold at 60 °C for 1 hour.
   e. Raise to 80 °C at a rate of 1 °C per minute.
   f. Hold at 80 °C for 3 hours.
   g. Cool to room temperature.
18'.'The sample is demoulded and placed into an oven.
19'.The sample is post cured following the below cycle:
   a. the oven is heated to 110°C at a rate of 1 °C per minute.
   b. Hold at 110°C for 3 hours.
   c. Cool to room temperature.

Once cooled, the panel can be finished as follows:
Excess cured resin is removed from the surface of the product.
The surfaces are primed and then coated with an appropriate paste or paint where necessary, depending on surface voids.
If an internal grit layer is not applied in step 14, then the top surface is covered with a layer of a suitable adhesive then grit is layered over the top and the adhesive is allowed to cure.

While the curing cycles can be varied, care must be taken to ensure both that the necessary condensation reaction is substantially complete, and that the resulting water has been removed from the moulded element before final curing. Various changes can be made within the scope of the invention.

## Claims

1. A method of making a structural element by moulding a resin composition, comprising:
a resin system comprising:
45-60 wt % of a plant-derived polyfurfuryl alcohol resin; and
up to 15 wt % of a non-structural filler; and
35-40 wt % of a glass fibre,
the method comprising:
mixing the plant-derived polyfurfuryl alcohol resin and non-structural filler to produce the resin system;
laying up multiple layers of the resin system and the glass fibre in a mould;
subjecting the mould to an initial heating profile in an initial resin curing step so that the resin system undergoes a condensation reaction and such that substantially all of the water produced in the condensation reaction has been removed, wherein the heating profile comprises:
holding the mould at a starting temperature for a first predefined period;
raising the temperature of the mould to an intermediate temperature;
holding the mould at the intermediate temperature for a second predefined period;
raising the temperature of the mould to a final temperature;
holding the mould at the final temperature for a third predefined period;
cooling the mould to ambient temperature; and
removing the product from the mould; and
subsequently subjecting the product to a further heating profile so as to undergo a post-curing step comprising a Diels-Alder reaction, the further heating step comprising:
heating the product to a fourth temperature that is higher than the third temperature;
holding the product at the fourth temperature for a fourth predefined period; and
cooling the product to ambient temperature.

2. A method as claimed in claim 1, wherein:
the first temperature is about 50 °C, and the first predetermined period is about 4 hours
the second temperature is about 60 °C, and the second predetermined period is about 1 hour;
the third temperature is about 80 °C, and the third predetermined period is about three hours; and
the fourth temperature is about 110 °C, and the fourth predetermined period is about three hours.

3. A method as claimed in claim 1 or 2, comprising performing the initial heating profile with the mould in an oven or using a self-heating mould, and optionally further comprising adding an internal release agent to the resin composition and/or coating the surface of the mould with external release agent before laying up.

4. A method as claimed in any preceding claim, further comprising adding grit to the final layer of resin when laying up, and/or laying up one or more layers of jute fibre as final layers.

5. A method as claimed in any preceding claim, comprising laying up 10 layers of glass fibre, or nine layers of glass fibre and two layers of jute, or 11 layers of glass fibre and one layer of jute, optionally wherein one layer comprises four rovings of glass fibre or jute fibre in the mould.

6. A method as claimed in any preceding claim, wherein the resin system further comprises:
up to 5 wt % of a solvent such as water; and
4-6 wt % of a catalyst system.

7. A method as claimed in any preceding claim, wherein the glass fibre is an E-glass or E-CR glass having a tensile strength of greater than 2000 MPa.

8. A method as claimed in any preceding claim, wherein the non-structural filler comprises:
up to 5 wt % talcum powder; and
up to 10 wt % jute fibre.

9. A method as claimed in any preceding claim, wherein the structural element is a load bearing element such as a flooring pane, optionally wherein the load bearing element comprises a load bearing surface in the form of an open grating or mesh, or a panel with a substantially solid load bearing surface.

10. A resin composition, comprising:
a resin system comprising:
45-60 wt % of a plant-derived polyfurfuryl alcohol resin; and
up to 15 wt % of a non-structural filler; and
35-40 wt % of a glass fibre.

11. A resin composition as claimed in claim 10, wherein the resin system further comprises:
up to 5 wt % of a solvent such as water; and
4-6 wt % of a catalyst system.

12. A resin composition as claimed in claim 10 or 11, wherein the glass fibre is an E-glass or E-CR glass having a tensile strength of greater than 2000 MPa.

13. A resin composition as claimed in claim 10, 11, or 12, wherein the non-structural filler comprises:
up to 5 wt % talcum powder; and
up to 10 wt % jute fibre.

14. A structural element having a predetermined shape formed by moulding the composition of any of claims 10 - 13.

15. A structural element as claimed in claim 14, comprising a load bearing element such as a flooring panel, wherein the load bearing element optionally comprises a load bearing surface in the form of an open grating or mesh, or a panel with a substantially solid load bearing surface.
